# EUROPEAN PATENT SPECIFICATION

(11) **EP 2 779 837 B1**
(45) Date of publication and mention of the grant of the patent: **03.04.2019**
(21) Application number: 12794616.8
(22) Date of filing: 16.11.2012
(51) Int. Cl.: A23G 3/00, A23G 3/54, A23G 3/42, A23G 3/02, A23G 4/20, A23G 3/20, A23G 3/34

(54) **METHOD OF MAKING A MULTILAYER CONFECTIONERY**
VERFAHREN ZUR HERSTELLUNG EINER MEHRSCHICHTIGEN SÜSSWARE
PROCEDE DE FABRICATION D'UNE CONFISERIE EN MULTICOUCHES

(30) Priority: 17.11.2011 EP 11380093
(43) Date of publication of application: 24.09.2014
(73) Proprietor: WM. Wrigley Jr. Company, Chicago, IL 60622 (US)
(72) Inventor: VERDU, Luis Bordera, Hinsdale, Illinois 60521 (US); POPA, Lavinel Bill, Chicago, Illinois 60634 (US); YAH, Julie Rene, Illinois 60068 (US); CARCASONA, Emilio Romero, E-08192 Barcelona (ES); FABRE, Juan, E-08190 Barcelona (ES); BLAZQUEZ, Melchor, E-08912 Barcelona (ES); BROWN, Scott Garrett, Oswego, Illinois 60543 (US)
(74) Representative: Dehns
(86) International application number: PCT/US2012/065562
(87) International publication number: WO 2013/074951

(56) References cited:
- EP-A2- 1 757 193
- WO-A1-2008/114013
- WO-A2-2004/106273
- WO-A2-2011/026003
- WO-A2-2011/084759
- JP-A- 2005 333 946
- JP-A- 2006 254 906
- US-A- 4 640 717
- US-A- 5 362 505
- US-A1- 2007 048 418
- US-A1- 2007 259 070
- US-A1- 2008 166 449
- US-A1- 2008 305 231

## Description

### FIELD OF THE INVENTION

The present invention relates to a process for making multilayer confectionary products that comprise a partially crystalline confection layer and a chewy confection layer. Also described are confectionary products produced by that process.

### BACKGROUND OF THE INVENTION

Consumers have indulged in different forms of confections for hundreds of years. Confection production has changed over time to meet the interests, desires and needs of consumers, as well as the practical requirements of the confection manufacturers. Confections may be formed having various textures or layers, such as soft, chewy, hard, brittle, etc., all of which are provided to meet the liking of the consumers. For example, some consumers like hard and brittle confections on their own, or in combination with other confection textures. When a hard confection that is brittle is combined with a soft confection, the brittle confection is perceived as even more brittle than when it was alone. A consumer's mouth notes the comparative textures as the multiple layer confection is chewed. A brittle confection may be characterized as being crunchy when chewed. The consumer can feel and hear the sound of the confection breaking-up into small pieces as it is chewed, that is, they can hear and feel a "crunch" during chewing. When chewed, a brittle confection tends to not just break cleanly into two pieces when teeth pass through it, but instead, the confection tends to shatter into many small pieces. The more brittle the confection, the smaller the resulting broken pieces. Consumers like confections that have a fast release of ingredients, often described as a burst of sweetness and/or flavor. The smaller the broken confection pieces and the greater the number of small confection pieces, such as with a brittle confection, the more quickly the pieces dissolve in saliva, resulting in a perceived fast delivery of the ingredients.

In general, consumers like variety within their confections. Confections with multiple textures lead to multiple physical sensations perceived by the consumer. A confection with multiple textures may further include multiple ingredient release characteristics, which result in varied delivery of sweetness, flavor, actives and sensates. As used herein, sensates are ingredients that create a physical response, including but not limited to, tingling, numbing, warming, cooling, and combinations thereof. A soft confection, such as a chewing gum or other chewy confection, gives a contrast in texture with the brittle confection. The chewy confection also gives a slower release of ingredients than a brittle confection. Chewing gum and other soft and chewy confections are generally elastic and deform during chewing, but do not break or crack. Sweeteners and other water soluble ingredients (such as flavor and sensates) are slowly released from the chewy confection as saliva mixes with the chewy confection mass during chewing and dissolves the ingredients.

An example of a traditional product that has multiple textures and multiple speeds of release of ingredients is Eclipse ® chewing gum. In general, Eclipse ® chewing gum is in a pellet form having a chewing gum center and a hard confection outer layer. The outer confection layer is hard, and can also be brittle. As a result the brittle confection breaks up and dissolves during chewing thereby releasing ingredients faster than the softer center chewing gum confection layer. Such released ingredients include, but are not limited to, flavors, actives, and sensates. Often these confections also include high intensity sweeteners (HIS) to increase the sweetness of the confection.

The hard confection layer of Eclipse ® chewing gum is comprised of an array of crystals containing sweetener in crystalline form. Additional ingredients are further included in or between the sweetener crystals. In general, the brittleness of a hard confection layer is the result of the array of sweetener crystals having numerous points of weakness between neighboring crystals. The array of sweetener crystals is such that when force is applied by teeth to the confection layer during chewing, fractures are created between crystals. The fractures cause the confection layer to be brittle and so to shatter into many small pieces, thus creating an audible and tactile crunchiness sensation.

Currently, the most popular means of making the brittle confection layer around chewing gum is by pan coating. Traditional chewing gums contain 30 - 32 wt. % hard confection outer layer and 68 - 70 wt. % chewing gum center layer. With pan coating the confection comprising an array of crystals is produced by a multi-step process. In general, the pan coating process involves multiple spray applications of supersaturated confection solution, or molten confection mass containing sweetener, on to the confection center layer pieces that are tumbling in a coating pan (i.e., Driam™, or other tumbling apparatus) with drying pauses between spray applications during which the spray applied material crystallizes. Applications of confection solution or molten mass continue to be applied to the confection center layer until the preferred amount of outer confection material is applied.

Although, the pan coating process can create an outer confection coating that has a brittle texture, there are several challenges with pan coating processing. One challenge is the required processing time to create a hard texture that is also brittle. A confection pan coating on a chewy center could require 10 - 100 fluid spray applications, with tumbling and drying between each. For crystal formation to occur, time must be allowed to evaporate the liquid in each spray application and to grow the crystals from the supersaturated or molten sweetener spray. The higher the crystal content, the more brittle the confection layer. Also, with all spray applications, care must be taken to keep application volume small or a later application can dissolve or melt crystals formed from an earlier application. Attempts have been made to speed up the pan coating process, with limited success.

One example of a method used to shorten pan processing time is spraying a more heavily concentrated sweetener solution onto the chewy confection center layers. This method requires greater drying time and/or application of hot blowing air between spray applications to allow the applied material to crystallize. This tends to cause uneven and/or large crystal growth with noncrystallized hardened mass between the crystals, all of which reduces the layer's crunchiness, ultimately resulting in a reduction in the perceived crunchiness of the product.

A second example of a method used to shorten pan processing time is to apply an amount of crystalline sweetener material (also called dry charge) to the wet surface of the confection after the spray application. Some of the added dry charge material acts as nucleating agent, and some dry charge material increase the concentration of the applied supersaturated solution. Both of these encourage crystallization of the applied solution. This may also result in uncontrolled crystal growth, which may cause large crystals to form resulting in increased layer hardness, but decreased layer brittleness, and ultimately decreased crunchiness.

A third example of a method to shorten pan processing time is by using molten sweeteners as the mass sprayed onto chewy confection layers. This technique does reduce the pan coating process time because less time is needed to evaporate the water contained in an applied supersaturated solution. The use of molten sweeteners still requires many spray applications, along with time between each spray addition to allow cooling and crystallization of the applied mass. Also, care must be taken that later applied layers do not re-melt the earlier layers. Molten sweeteners also require additional equipment such as heated fluid transfer lines and spray application nozzles to prevent clogging.

A second challenge of the pan coating process, in addition to the long processing time, is controlling the crystallization of the sweetener itself. As described above, methods used to attempt to speed up pan processing may affect crystal growth. Slow crystal growth during application of the confection layer may create large crystals. Large crystal formation creates a gritty coating texture, either as a surface texture or when broken into smaller pieces. Smaller crystals may create a smoother, less gritty, texture, but smoother textures will require more nucleation sites such as from dry charge sweetener powder added during fluid spray application, or by very slow application of multiple spray and dry cycles.

The type of sweetener chosen also affects the speed and amount of crystal growth. Some sweeteners (e.g., sorbitol) are stable in their supersaturated or molten state and may need additional ingredients to initiate or continue crystal formation. With these sweeteners, some powdered sweetener may be added to the supersaturated or molten sweetener mass. Other sweeteners (e.g., erythritol) are not stable in their supersaturated or molten state and may need additional ingredients to inhibit (that is, slow or limit) their crystal formation.

Crystallization of sweetener molecules may be inhibited by ingredients included in the supersaturated confection solution or molten confection mass used in making the confection layers. These inhibitor ingredients often result in a less brittle layer. These inhibitor ingredients include, but are not limited to fiber, starch, dextrin, gum arabic, inulin, hydrogenated starch hydrolasate, corn syrup, polyol syrups, other sweeteners, calcium carbonate, talc, and combinations thereof. These inhibiting ingredients may be added to the applied solution or molten mass in order to, but not limited to, speed up the crystallization process, reduce coating cracking, add flavor and/or sweetness, and to reduce the overall amount of sweetener in the coating. These inhibiting ingredients interfere with sweetener growth by blocking contact between sweetener crystals and/or by gluing sweetener crystals together, thus creating fewer weakness, or fracture, points between crystals that are necessary to have a brittle confection layer. Accordingly, it is the addition, or incorporation of these ingredients within a confection that fail to provide a brittle confection layer, or result in a non-brittle confection layer.

A third challenge of pan coating includes limitations on the center confection layer formula and format. In order to endure the elevated temperatures of pan coating, only certain center confection layer formulas can be used for making centers with the pan coating process. Center confection layer pieces need to maintain a firm shape, not break, not melt, and not become sticky during application of the outer confection layer. Center confection layer formulas cannot contain ingredients that would interfere with the hardening and crystallization of the applied supersaturated or molten outer layer confection mass.

A fourth challenge of pan coating includes the limits on the final form of the final confection product that contains a brittle confection mass. With the pan coating process, the formation of a brittle confection mass requires a second confection layer (that is, a "center" confection mass, layer, or piece), since the brittle confection mass is created by building a brittle mass around this center piece. The pan coating process includes tumbling the confection centers. This tumbling motion occurs when the confection center layer pieces are moved around in an approximately circular movement in a rotating pan or cylinder while being sprayed with hot supersaturated sweetener solution or molten sweetener mass, The tumbling process rounds, or smoothes, edges and corners of the center confection pieces as the outer confection mass is applied around roughly the entire outer surface of the center confection mass. The tumbling is a necessary part of the pan coating process as it creates the friction required to create sweetener crystal growth.

A different process for making a multiple layer confection, which has multiple textures and multiple ingredient release, is through making a hard, amorphous (i.e., glass) confection mass layer around an additional confection center mass layer by dipping or molding. An example of a multilayer confection made by this type of process is a Tootsie Pop ® lollipop confection. The hard amorphous confection layer has sweetener ingredients in an amorphous form with other ingredients trapped within the amorphous form. These other ingredients include, but are not limited to, flavors, colors, actives, HIS, and sensates. If the Tootsie Pop ® lollipop is chewed, the consumer will perceive a two stage delivery of textures and ingredient release. One delivery stage is when the outer hard amorphous confection layer breaks as teeth are forced through it and the resulting pieces are slowly dissolved. A second delivery stage is when the center soft chewing gum layer is chewed and saliva washes ingredients from the gum mass. Though the outer layer breaks as it is chewed, the flavors, sensates and other additional ingredients are still trapped in the amorphous confection and the confection needs to dissolve to release the ingredients. There is no fast release of ingredients from an amorphous confection layer of this type.

The process of making these multilayer confection products, which contain a hard amorphous confection layer around an additional center confection layer, is by dipping or molding. The amorphous confection layer may be hard, but not brittle, and so not crunchy, unless the amorphous layer contains enough of the sweetener in crystal form to create enough weak points in the confection layer to cause fracturing when chewed. The more crystalline the confection, the more brittle the confection, and so the more crunchy the confection.

The dipping and molding methods are traditionally used to create a smooth, clear, hard amorphous outer layer around a center, which is usually a soft and/or chewy confection layer, such as chewing gum. During the dipping process a confection layer is immersed in a fluid mass that contains a supersaturated confection solution or a molten confection mass that contains sweeteners. The act of immersion may be done once or several times until the desired thickness of confection material is accumulated on the center. Drying and/or cooling steps may be alternately integrated with each immersion step. The type of sweetener chosen may also affect the dipping process as the properties of the sweetener affect how fast it will crystallize. As previously discussed, some sweeteners (e.g., sorbitol) are stable in their supersaturated or molten form and will need additional ingredients to initiate and encourage crystal growth. Other sweeteners (e.g., erythritol) are not stable in their supersaturated or molten form and will need additional ingredients to inhibit, and control, crystal growth. So, the dipping process for making a hard confection layer that is brittle is very time consuming and difficult to control.

The molding process comprises depositing (or pouring) a supersaturated solution or a molten confection mass into a mold containing a center confection layer, for example, a soft and/or chewy confection mass. To create crystal formation, the molding method may need drying and/or cooling between multiple supersaturated solution or molten mass deposits to the mold. The center confection mass could be formulated to encourage crystal growth. As previously discussed, the choice of sweetener could affect the additional ingredients that may be added to the confection mass,to initiate and/ or control crystal growth.

The dipping and molding processes have challenges as to the final format of the final multilayer product made. One limitation of the dipping and/or the molding process is that the hard amorphous confection layer creates a continuous layer around a center layer. Also, though the molding process traditionally creates an amorphous confection layer around a center layer, an amorphous confection mass could be made without a center layer. That is, the amorphous confection mass could be deposited, or poured, into an empty mold. But, the dipping process requires a center confection layer upon which the amorphous confection material adheres to and builds on during dipping. The shape of the center confection layer will be roughly duplicated as the amorphous confection mass builds upon it, though corners and edges will be rounded

The dipping and molding processes also have challenges as to confection center formulas. The center confection formula must be able to handle the heat of processing and not interfere with the crystallization of the outer confection mass.

Although consumers like variety in their confectionary product choices, many consumers like some indication of what they will be consuming before they put it in their mouth. As already discussed, pan coating, dipping, and molding processes create an outer confection layer that completely surrounds the center confection layer. With these processes consumer only see the color and texture of the outer layer. Therefore, it would be useful to have a process that could deliver a confection mass, or layer, that would be hard and brittle, with a consumer acceptable crunchy texture. Additionally, it would be useful to have a process that could control sweetener crystal formation such that the final confection product has a consumer acceptable crunchy texture. Additionally, it would be useful to have a process where the amount of crystal growth may be controlled such that the confection mass is fluid and flexible from crystallization through packaging and yet be crunchy when a consumer chews the final product.

WO2011/084759 discloses multilayered compositions structures prepared from sugar free confectionery products and chewing gum. The candy layer may consist of a chewy candy, a crunchy candy, a low boiled candy, a hard boiled candy, a fondant, a caramel, a jelly, a gummy, a nougat, a fruit leather, an edible film, a nut paste, chocolate, fudge, and a combination thereof.

### SUMMARY OF THE INVENTION

The invention relates to a process for making a multilayer confection, comprising the steps of:
i) creating a partially crystalline confection layer containing at least 80 wt. % sweetener, wherein at least 60 wt. % of the sweetener is in crystal form, by a process comprising the steps of:
   a) mixing a confection mass containing at least 80 wt. % sweetener;
   b) melting the confection mass;
   c) crystallizing the confection mass at a pressure between 2068 - 6895 kPa (300 - 1000 psi), such that at least 60 wt. % of the sweetener in the confection mass is in crystal form; and
   d) forming the confection mass;
ii) creating an additional chewy confection layer; and
iii) combining the partially crystalline confection layer and the additional layer to form a multilayer confection.

### BRIEF DESCRIPTION OF THE FIGURES

Figure 1 is a process flow diagram for making a confection product in accordance with an embodiment of the present invention.
Figure 2 is a block flow diagram for making a confection product by a process in accordance with another embodiment of the present invention.
Figure 3 is a block flow diagram for making a confection product by a process in accordance with another embodiment of the present invention.
Figure 4 is a process flow diagram for making a multi-layered confection product in accordance with another embodiment of the present invention.
Figure 5 is a perspective view of a confection product in accordance with an embodiment of the present invention.
Figure 6 is a perspective view of a confection product in accordance with another embodiment of the present invention.

### DETAILED DESCRIPTION OF THE INVENTION

The present invention relates to a process for creating a multilayer crystallized confection product. In particular, the invention relates to a process for creating a multilayer hard and brittle crystallized product containing at least 80 wt. % sweetener, wherein at least 60 wt. % of the sweetener is in crystal form.

The present invention further relates to a process for creating a multilayer confection product comprising at least a hard and brittle, preferably crunchy, crystallized confection layer and an additional chewy confection layer. More specifically, the present invention further relates to a process for forming a multilayer confection product, including the steps of creating at least one hard and brittle confection layer containing at least 80 wt. % sweetener, wherein at least 60 wt. % of the sweetener is in crystal form formed by a crystallization process; creating an additional chewy confection layer; and combining the layers into a multilayer confection product. Moreover, the process may further include the step of finishing the combined layers by a variety of methods including, but not limited to, pressing, scoring, cutting, embossing, debossing, spraying with liquid, and dusting with
particulates or powders.

An embodiment of the present invention relates to a process for controlling the crystallization of a sweetener as a confection mass is produced. In accordance with an embodiment of the invention, the sweetener content of a confection mass is at least partially crystallized early in the production process and then completes crystallization by the time the consumer chews the final packaged product at room temperature (i.e., 20 - 27 C). During processing the amount of sweetener in crystal form is controlled in such a way that the confection mass remains fluid and flexible until the product reaches room temperature, at which time the finished product is hard and brittle. The confection mass contains at least 80 wt. % sweetener, wherein at least 60 wt. % of the sweetener is in crystal form after the confection mass completes crystallization and reaches room temperature.

In accordance with an embodiment of the present invention, the sweetener ingredients may include, but are not limited to, sucrose, dextrose, maltose, isomaltulose, polydextrose, galactose, trehalose, tagatose, sorbitol, maltitol, isomalt, erythritol, xylitol, mannitol, or combinations thereof. Preferably the sweeteners of the embodiments of the present invention are isomalt, sorbitol, maltitol, xylitol, erythritol, or combinations thereof. Most preferably, the sweetener is isomalt or sorbitol. The confection mass can also include additional ingredients, such as, but not limited to, flavors, high intensity sweeteners (HIS), sensates, actives, and colors. In one embodiment, the crystallized confection includes only a sweetener and additional ingredients selected from the group consisting of sweeteners, colors, flavors, actives, sensates and combinations thereof. Preferably, the sweetener is isomalt, sorbitol, maltitol, xylitol, erythritol or combinations thereof.

As previously discussed, a hard confection is described as having a brittle texture if the hard confection breaks (i.e., shatters) into many small pieces when it is bitten into. The more brittle the confection, that is, the more it breaks into small pieces, the more likely it will be perceived as crunchy by the consumer during chewing because they will hear and feel more confection breakage. In general the term "brittle" is characterized as the fracturing of the confection piece along points of weakness between sweetener crystals during chewing. Additional ingredients in a confection formula can impact and actually limit the number of weak points in a confection mass. The additional ingredients can act as "glue" to hold sweetener crystals to each other. These additional materials may include supersaturated sweetener solution, molten sweetener, fiber, starch, dextrin, hydrocolloids, gum arabic, inulin, and combinations thereof. In an embodiment of this invention, the confection mass contains little or no such additional ingredients, and so the confection mass formula may be used in creating a hard confection that is brittle.

The process for making such a crystallized confection that is hard and brittle, may be accomplished in accordance with an embodiment of the present process invention that includes the steps of: 1) mixing a confection mass containing at least 80 wt.% sweetener; 2) melting the confection mass; 3) crystallizing the confection mass at a pressure between 2068 - 6895 kPa (300 - 1000 psi), such that at least 60 wt.% of the sweetener in the confection mass is in crystal form; and 4) forming the confection mass into a ribbon, sheet, or rope and then into individual pieces. A conditioning step may be added between the crystallizing step and the forming step, where the conditioning step prepares the crystallized mass to flow through the remaining process steps in a controlled and even flow.

As previously suggested. in accordance with an embodiment of this invention, the process includes the step of mixing confection ingredients together to create a homogeneous confection mass. Preferably, the confection ingredients are mixed together to form a confection mass of even density without lumps. In one embodiment, the confection ingredients and the resulting mixed confection mass are in powder form. Preferably, the powdered confection mass contains approximately less than 10 wt. % water. The presence of water in the confection mass during processing increases the possibility of the formation of supersaturated solution that may become trapped between crystals during crystallization, resulting in a less brittle finished product. The powdered confection mass may include sweeteners, singularly or in combination as discussed above, as well as additional ingredients known in the confection industry. The resulting confection mass of embodiments of this invention contains at least 80 wt. % sweetener.

In accordance with an embodiment of the invention, the process further includes the step of melting the confection mass. In accordance with one embodiment, the powdered confection mass may be melted through the application of shear. The term "shear" is herein defined to include the application of energy to the confection mass, such as through mixing the ingredients using a rotating plate, pin or screw configuration. Additional heat may be applied to the confection mass during the melting process step. Preferably, all of the sweeteners in the confection mass are melted to form a uniform mass before the mass flows to the next step of the process.

In accordance with an embodiment of the invention, the process further includes the step of crystallizing at least a portion of the melted confection mass. In one embodiment, the melted confection mass may be mixed and cooled in such a way that at least 60 wt. % of the sweetener in the confection mass converts into its crystal form. In accordance with an embodiment of the invention enough shear is applied through mixing to transform at least some of the melted sweetener in the confection mass into its crystal form. To encourage crystal growth, the confection mass may be cooled during this process step by any means known to those skilled in the art.

In an embodiment of this invention, the process further includes the step of forming the partially crystallized confection mass into a shape. The confection mass may be formed by forcing the confection mass through an opening, that may or may not include a shaping member having a slit or hole in it. In accordance with a preferred embodiment, when the preferred amount of crystal content is reached in the crystallization step and/or conditioning step (as discussed in more detail below), the confection mass is forced through an opening having a shaping member. The opening and/or shaping member may be designed to form the mass into a desired product form, including for example, but not limited to, a ribbon, sheet, or rope shape. Moreover, the movement of the confection mass through the opening and/or shaping member may result in more shear (i.e., energy) being applied to the confection mass, thus resulting in the conversion of more amorphous sweetener material into its crystal form. Accordingly, the confection mass of one embodiment contains at least 90 wt. % sweetener, wherein at least 70 wt. % of the sweetener is in crystal form when the confection mass is at room temperature. As previously suggested, most preferably the amount of crystal content in the confection is such that it will be hard and brittle at room temperature.

In another embodiment of the invention, the process may further include the step of conditioning the confection mass after the crystallization step and before the forming step. This processing step prepares the confection mass for exiting the shaping member in a consistent, even flow. The conditioning process step may additionally include further heating of the partially crystallized confection mass above the temperature of the mass during the crystallization process. The conditioning step may further optimize temperature and mixing conditions resulting in a more uniform crystal size, such as by, for example, through melting large crystals and growing small crystals.

In another embodiment of the invention, the process may further include the step of finishing the confection mass after the forming step. Accordingly, the product formed (e.g., a ribbon, rope or sheet) may be further processed in a finishing step. The finishing step may include, but is not limited to, pressing, scoring, cutting, embossing, debossing, spraying with liquid, dusting with particulates or powders, or combinations thereof, the product form. In a further embodiment of this invention, the confection mass can be formed into individual confection pieces before or after the finishing step. This final piece forming can be accomplished by any method known to those in the art, including, but not limited to, drop roller, Uniplast, rotary cutter, or knife wheels.

In accordance with embodiments of the present invention, the process steps for creating a crystallized confection mass, as discussed above, may be achieved through a batch, a continuous process, or a semi-batch process (that is, a combination of process elements of both the batch and continuous processes).

In one embodiment of the present invention, a batch process may be used wherein a batch of ingredients, that is, a set weight of ingredients, may be mixed, melted, and crystallized into a confection mass. The confection mass is then passed through some means of forming (e.g., a die plate having a slit or hole) such that the partially crystallized confection mass is formed into, for example, a ribbon, sheet, or rope-like shape or other product form. The batch process may be accomplished through the use of various methods, such as for example, a kettle with a water jacket and a mixing member, such as, but not limited to a spindle or blade. Moreover, the forming of the confection mass into a shape (e.g., ribbon, sheet, or rope) may be accomplished by allowing the fluid confection mass to travel out of the bottom of the kettle, through a pipe, and optionally through a die plate with a slit or hole.

Preferably, the steps used to create a crystallized confection mass may also be accomplished through the use of a continuous process. In a continuous process, the confection mass flows (i.e., moves) in one direction through a processing apparatus, such as an extruder. One particular advantage of using a continuous process is controllability. In particular, continuous processing ensures that controllable processing conditions are applied to all of the material within the process. Preferably, this continuous process would be accomplished through the use of an apparatus having sections, or areas, designed for mixing, melting, and crystallizing a confection mass, as well as, an opening with or without a shaping member having a slit or hole for forming the confection. Preferably, the apparatus is designed so as to have continuous forward flow and adjustable application of shear. Preferably, the apparatus is designed so as to have adjustable application of heat or cooling. According to one embodiment of the invention, the adjustable application of shear applied to the confection mass in the apparatus may be provided independently in various sections of the apparatus. The application of shear may be applied, for example, through the integration of a screw configuration that contains at least one screw running longitudinally through the apparatus (as will be discussed in more detail below). One way of adjusting the application of shear is through the use of screw elements that may be arranged to give high shear during melting of the confection mass and low shear during the crystallizing step. For example, as discussed in more detail below, in a preferred embodiment, a twin screw, intermeshing, co-rotating screw arrangement runs longitudinally through an apparatus from ingredient addition port through the mixing, melting and crystallization sections of the apparatus.

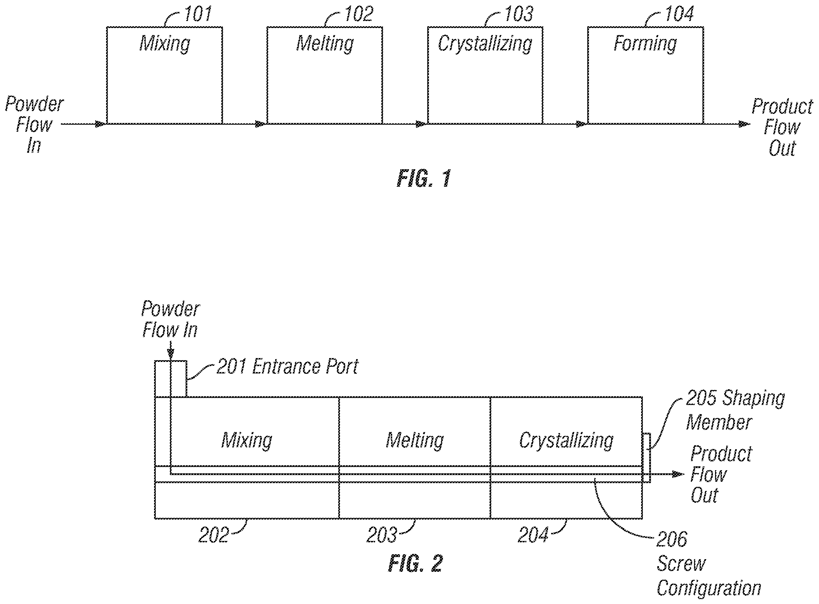

As originally set forth above, Figure 1 further illustrates a flow diagram of an embodiment of the present invention using a continuous process including the steps of: 1) mixing (101) a confection mass containing at least 80 wt. % sweetener; 2) melting (102) the confection mass; 3) crystallizing (103) the confection mass, wherein at least 60 wt.% of the sweetener in the confection mass is in crystal form; and 4) forming (104) the confection mass.

In accordance with the process as shown in Figure 1, Figure 2 further illustrates a block diagram of an apparatus that may be used in connection with the process described. As shown, the apparatus may be divided into multiple sections and/or portions for performing the various steps of the process. In an embodiment, Figure 2 provides an apparatus, wherein: 1) the confection mass is added through an entrance port (201); 2) the confection mass is mixed in a first section (202); 3) the confection mass is melted in a second section (203); 4) the confection mass is crystallized in a third section (204); and 5) the confection mass is formed into a product form (such as a rope, ribbon or sheet) through a shaping member (205). The confection mass may additionally be cut into individual pieces. In general, a screw configuration (206) may be used within the apparatus to convey the confection mass from the entrance port to the forming section

In accordance with an embodiment of this invention, a hard and brittle confection mass is produced by a continuous process through the use of an apparatus with sections, such as an extruder. An entrance port opens into a first section of the apparatus. In this first section, a confection mass (containing less than 10 wt. % water, preferably less than 2 wt. % water) is mixed at a temperature below sweetener melting temperature, preferably at approximately 20°C - 40°C, more preferably at 20°C - 27°C. Moreover, the confection mass is mixed until the mass is homogeneous, preferably removing any ingredient lumps.

The confection mass may be conveyed (i.e., moved) by the screw configuration to another section of the apparatus for the melting process step. In this second section of the apparatus, the confection mass is mixed and melted at a temperature chosen so as to melt the sweetener in the confection mass, preferably at approximately 40°C - 190°C, more preferably at 60°C - 180°C. The temperature is dependent on the melting point of the sweetener in pure crystal form. The amount of heat applied to the confection mass is dependent on both the melting point of the sweetener in pure crystal form and the amount of heat created by shear created in processing.

Once the mixed mass is melted, the melted mass may then be conveyed by the screw configuration to another section of the apparatus for the crystallization step. In this third section of the apparatus, the confection mass is mixed and cooled at a temperature such that the sweetener will at least partially crystallize, preferably at approximately 50°C - 180°C, more preferably at 60°C - 180°C, and under pressure of approximately 2068 - 6895 kPa (300 - 1000 psi). The pressure in this section may be created by the increased viscosity of the confection mass as at least part of the sweetener in the mass crystallizes. The pressure may also be created by screw elements configured to move mass forward and then backwards in this section. The pressure in this section may also be created by the mass being conveyed forward against the exit opening of the extruder, especially if the opening has a smaller diameter than that of the extruder barrel. The pressure in this section may be created by the mass being conveyed forward against a shape member at the exit opening of the extruder. Thus, the crystallizing conditions are dependent on the melting point of the sweetener and the crystallizing conditions need to be such that the final formed confection mass, having at least 80 wt. % sweetener, will have at least 60 wt. % of the sweetener in its crystal form.

As previously described with reference to Figures 1 and 2 an extruder may be used having sections for mixing, melting, crystallizing, and conditioning the confection mass. These sections of the extruder may contain sub-sections (also called "barrels") in order to maintain the optimal conditions for mixing, melting, crystallizing, and conditioning the confection mass. These sub-sections may have temperatures different from their fellow sub-sections, but all sub-sections may have temperatures within the section temperature ranges already discussed.

As further shown in Figure 2, the shape member (205) may be a die plate added to the opening of the extruder. The die plate contains an opening that forms (i.e., shapes) the extruding confection mass as it leaves the extruder. The die plate may contain a slit or hole that will form the confection mass, wherein the product form may be a ribbon, sheet, or rope-like shape. The rope-like shape need not be cylindrical, but may be any geometric shape (i.e., square) or silhouette (i.e., clover leaf or animal outline). The ribbon or sheet-like shape need not be smooth of flat, but may have ridges.. The die plate, because of its limited aperture, creates an obstruction against which the screw configuration pushes the confection mass, creating more potential crystal growth than without a die plate. This creates additional shear that can aid in creating consistent, even flow of crystallized confection mass from the extruder. The die plate edges also may create additional shear on the confection mass, aiding in the crystallization of the sweetener mass as the mass flows out of the extruder.

When the crystallized confection mass exits the extruder through the die plate, a crystallized confection ribbon, sheet, or rope is formed. The confection mass of the ribbon, sheet, or rope contains at least 80 wt. % sweetener, wherein at least 60 wt. % of the sweetener in the crystallized mass is in crystal form.

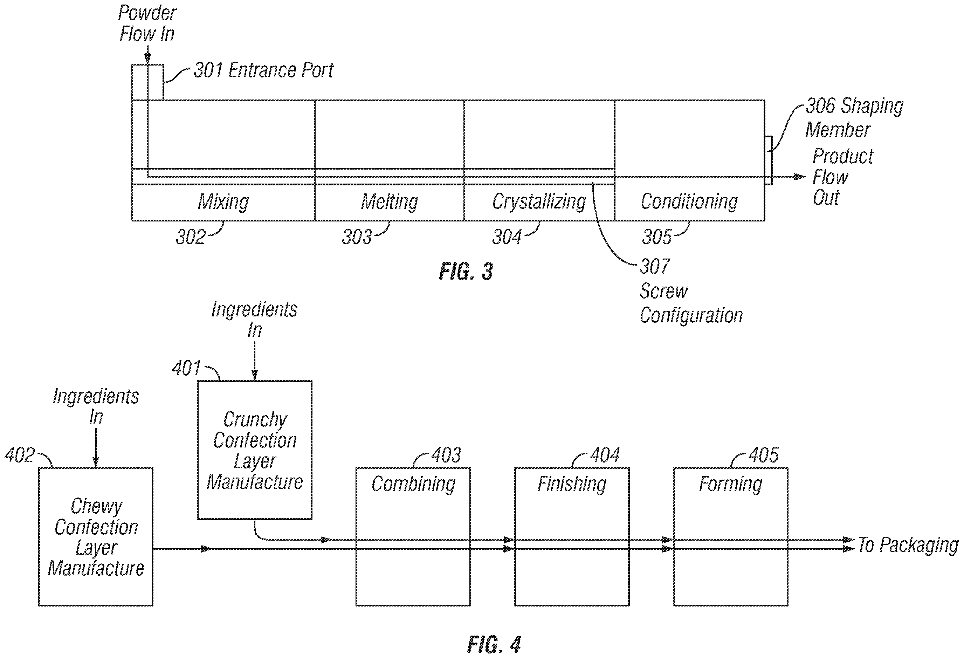

Figure 3 further illustrates a block diagram of an apparatus for use in an embodiment of the present invention, wherein: 1) the confection mass is added through an entrance port (301); 2) the confection mass is mixed in a first section (302); 3) the confection mass is melted in a second section (303); 4) the confection mass is crystallized in a third section (304); 5) the confection mass is conditioned in a fourth section (305); and 6) the confection mass is formed into a rope, ribbon or sheet through a shaping member (306). The confection mass may additionally be cut into individual pieces. In general, a screw configuration (307) may be used within the apparatus to convey the confection mass from the entrance port to the forming section.

The conditioning process step can be completed in a section within the extruder or in an apparatus separate from the extruder, for example, in a die head apparatus. This fourth section or die head apparatus would be capable of mixing, cooling, and/or heating the crystallized confection mass before the mass exits the die plate. The crystallized confection mass may be conditioned in order to prepare the confection mass to exit the extruder through a die, or die head apparatus. This conditioning step may contain further heating of the confection mass at a temperature dependant on the sweetener melting point, preferably at approximately 80°C - 200°C, under a pressure preferably at a pressure of 2068 - 6895 kPa (300 - 1000 psi). Conveying the confection mass from the extruder ingredient addition port to the die plate and/or to the die head apparatus with die plate, may be done by a screw configuration.

As previously described with Figure 2, sections of the extruder may contain sub-sections in order to maintain the optimal conditions for mixing, melting, crystallizing, and conditioning the confection mass. The die head apparatus may also have sub-sections. These sub-sections may have temperatures different from their fellow sub-sections, but all sub-sections may have temperatures within the section temperature ranges already discussed.

In accordance with further aspects of this invention, the confection mass ribbon, sheet, or rope may be heated to control confection mass crystal content, product flexibility, and product viscosity. The confection mass preferably stays fluid and flexible throughout the forming step to avoid unwanted breakage or cracking. In order to keep the confection ribbon, sheet, or rope at the desired temperature for forming and/or finishing, the confection mass temperature (after exiting the die plate and/or die head apparatus) may be controlled by a number of methods, including but not limited to, performing the forming and/or finishing process in a temperature controlled compartment; conveying the confection mass on heated conveyor belts, plates, or platforms; irradiating the confection mass with infrared lamps, or blowing hot air onto the confection mass.

A finishing process step may further include, as part of the process, rollers or wheels that may press the confection mass. The pressing process may be done to press a pattern into the confection mass (e.g., embosses), or otherwise mark the confection mass. The rollers or wheels may be heated or cooled. In order to stabilize the pressed pattern or mark, the confection surface may be further chilled after pressing. The finishing process step may also include spraying the confection layer surface with a liquid, optionally containing additional dry (i.e., solid) material. The material sprayed may include, but is not limited to, colored or uncolored liquids comprising syrups, molten sweeteners, molten waxes, molten fat, oil, sweeteners, high intensity sweeteners (HIS), colors, actives, flavors, sensates and combinations thereof. Moreover, the finishing process step may further include dusting the confection layer surface with a particulate or powder. The material dusted may include, but is not limited to, colored or uncolored particulates or powders comprising waxes, fat, oil, sweeteners, high intensity sweeteners, colors, flavors, actives, sensates and combinations thereof. The particulates may include beads, nut pieces, or fruit pieces.

In accordance with another embodiment, the present invention further relates to a process of the invention for forming a multilayer confection product, wherein at least one of the layers is a hard and brittle, confection layer. This process for making a multilayer confection includes the steps of creating a brittle confection layer containing at least 80 wt. % sweetener, with at least 60 wt. % of the sweetener in crystal form; creating an additional confection layer, including, but not limited to, a chewy confection; combining the layers; and finishing them by such methods as described above, including, but not limited to, pressing, scoring, cutting, embossing, debossing, spraying with liquid, dusting with particulates or powder, or combinations thereof.

The chewy confection layer in a multilayer confection product may be produced by any process known to those skilled in the confection arts, such as, though not limited to, the use of an extruder, a heated mixing kettle, or other various methods for making confections. The additional confection layer may be, but is not limited to, chewing gum, toffee, caramel, fudge, chocolate, nougat, licorice, fondant, gummy, jelly, or combination thereof. Moreover, the additional chewy confection layer may contain, but is not limited to, colors, sweeteners, flavors, sensates, actives, fat, cocoa based ingredients, milk based ingredients, fruit based ingredients, proteins, hydrocolloids, fiber, starch, pectin, gelatin, gum base, emulsifiers, or combinations thereof. The sweetener ingredients can be, but are not limited to, sucrose, dextrose, maltose, isomaltulose, polydextrose, galactose, trehalose, tagatose, sorbitol, maltitol, isomalt, erythritol. xylitol, mannitol, or combinations thereof.

Moreover, the multilayer confection created by combining a brittle layer and an additional chewy confection layer may be further formed into individual confection pieces before or after finishing the multilayer confection by any method known to those in the art, including, but not limited to, drop roller, Uniplast, rotary cutter, or knife wheels.

In order to keep the combined layered confection at a desired temperature for forming and/or finishing, that is flexible, the combined layered confection mass temperature may be controlled by a number of methods, including but not limited to, performing the forming and/or finishing process in a temperature controlled compartment; conveying confection mass on heated conveyor belts; irradiating the confection mass with infrared lamps, or blowing hot air onto the confection mass.

Figure 4 illustrates a flow diagram of a method of making a multilayer confection having a brittle crystalline layer and an additional confection layer. This process includes the steps of: 1) creating (401) at least one hard and brittle confection layer; 2) creating (402) an additional confection layer; 3) combining (403) at least one hard and brittle confection layer and an additional confection layer; 4) finishing (404) the multilayer confection; and 5) forming (405) the multilayer confection into individual pieces. The finishing and forming process steps may be performed by methods and apparatus previously described. The multilayer confection may include additional materials between the confection layers, including, but not limited to, liquid ingredients sprayed or dry ingredients dusted onto individual layers before layers are combined.

As previously described it is desirable to maintain processing conditions, such that, the crystalline confection layer and the additional confection layer remain fluid and flexible until after the layers are combined. This will reduce layer breakage and also allow better adhesion of the layers to each other during combining (i.e., assembly) of the layers. Various methods of maintaining layer temperature may be used as previously described, such as, using a temperature controlled container or applying heat through various means. Temperature control during combining and further processing of the layers is also important to ensure that the crystalline confection layer does not melt or deform the additional confection layer.

A challenge with combining a partially crystallized confection layer with an additional chewy confection layer, such as chewing gum, is that the layers may possibly damage each other upon contact unless a further process step, layer tempering, is completed before combining the layers. The crystalline confection layer is most likely around or over 100 C when it exits the extruder and die plate. That temperature is greater than the melting point of the sweetener in the additional confection layer. Also, if the additional chewy confection layer is chewing gum, 100 C is higher than the softening temperature of chewing gum base. Hence, the crystalline confection layer will most likely deform or otherwise damage the additional chewy confection layer if the layers are combined immediately upon being formed. If the crystalline confection layer is cooled to the point where it will not melt, soften, or otherwise damage the additional confection layer, the crystalline confection may become too brittle and may break during combining of layers and during any further processing (e.g., finishing).

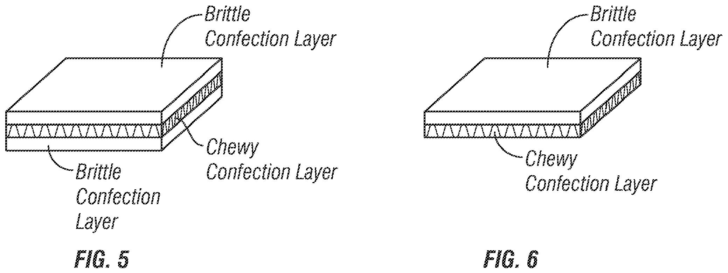

In an embodiment of this invention, a further process step includes a layer tempering process step, wherein the layers are individually handled in such a way that their temperature profiles may be adjusted post extrusion and before combining. In one embodiment of this invention, this layer tempering process is completed using a plate or platform, on which a hotter confection layer (e.g., crystalline layer) can rest before that layer moves on to touch a cooler confection layer (e.g., chewing gum layer). The plate contains a method of adjusting the temperature profile of the hotter confection layer without making the layer too brittle for further processing. Once the confection layers are tempered, they are combined into a multilayer confection that may be further finished and/or formed. Figures 5 and 6 illustrate embodiments of a multilayer confection product of the present invention. In particular, Figure 5 illustrates a multilayer confection product of the present invention containing three layers in a sandwich format, for example, two outer brittle crystalilized confection layers and a center additional confection layer. Figure 6 illustrates a multilayer confection product of the present invention containing two layers in a laminated format, for example, one brittle crystallized confection layer and one additional confection layer. Alternate configurations of the product are considered within the scope of the present invention, including alternative number of layers, alternative product shapes, and alternative orientations of layers. The hard and brittle confection layer of the present invention may be provided in combination with other layers (as described above), or provided independently as one single layer. Each of these are more specifically set forth in detail below in the provided Examples.

### EXAMPLES

Confection Examples 1 - 8: Confectionary examples, in accordance with the present invention, were produced having two brittle, at least partially crystallized confection layers made by the crystallization process previously described, and having one chewing gum layer. The resulting crystallized (i.e., crystalline) confection layers were perceived as brittle and crunchy when chewed less than 1 hour after the crystallized confection mass left the extruder. The chewing gum layer was perceived as softer than the crystallized confection layers.

Table 1 includes the formula of the chewing gum layer of the confectionary Examples 1 - 8. All components are wt. % dry solids.

| Table 1: Chewing Gum Formula | | |
|---|---|---|
| | | wt.% |
| Gum Base | | 31.0 |
| Sorbitol Sweetener | | 54.4 |
| Maltitol Syrup | | 11.0 |
| Flavor, Coolants, Color | | 2.6 |
| High Intensity Sweeteners | | 1.0 |
| Total | | 100.0 |

The chewing gum layer was made by standard chewing gum process, including extrusion of the gum mass into an extruded ribbon shape.

Table 2 includes the formulas of the crystalline (e.g., crystallized) confection layers of Examples 1 - 8. All components are wt. % dry solids. The crystallized confection layer formulas contained less than 10 wt. % water.

| Table 2: Confection Layer Formula | | | | | | | | |
|---|---|---|---|---|---|---|---|---|
| Example # | 1 | 2 | 3 | 4 | 5 | 6 | 7 | 8 |
| Sweetener | | | | | | | | |
| Isomalt | 99.0 | | | | | | | |
| Sorbitol | | 99.0 | | | | | | |
| Maltitol | | | 99.0 | | | | | |
| Xylitol | | | | 99.0 | | | | |
| Erythritol + Isomalt | | | | | 99.0 | | | |
| Erythritol + Polydextrose | | | | | | 99.0 | | |
| Mannitol + Polydextrose | | | | | | | 99.0 | |
| Sucrose | | | | | | | | 99.0 |
| Color, Flavor, HIS | 1.0 | 1.0 | 1.0 | 1.0 | 1.0 | 1.0 | 1.0 | 1.0 |

The crystalline confection masses of Examples 1 - 8 were processed in accordance with the process as previously described, and under the temperature conditions set forth in Table 3. The sweetener and additional ingredients (such as color, flavor and/or high intensity sweetener (HIS)) were pre-mixed. The resulting premixed confection mass was added in to a gravimetric blender attached to an extruder (Coperion ZSK-25). The extruder comprised two intermeshed screws, rotating in the same direction, located along the longitudinal length of the extruder chamber from the entrance port to a die plate. With Examples 1 - 5 and 8, a separate die head apparatus containing a die plate was attached to the extruder as can be seen. Table 3 further provides specific process conditions used to make different batches of the crystalline confection layers with the formulas in Table 2.

The gravimetric blender fed the confection mass powder into the first section of the extruder where it was further mixed. The mixed confection mass was then conveyed to the second section of the extruder, where the confection mass was mixed and melted. The melted confection mass was then conveyed to the third section of the extruder wherein the confection mass was cooled and mixed in such a way as to create crystal growth. The confection mass was then conveyed to a fourth section of the extruder. With Examples 1 - 5 and 8, the confection mass was conditioned in the die head apparatus and then conveyed through a die plate. With Examples 6 and 7, there was no conditioning of the confection mass before the mass was conveyed through the die plate. In all examples, the crystalline confection layers (e.g., masses) were combined with a chewing gum layer. In all examples, the crystalline confection layers were hard, brittle and crunchy in less than one hour after the confection mass exited the extruder.

Confection layers were made under processing conditions (set forth in Table 3) that allowed them to be fluid enough to exit the die plate, and yet firm enough to maintain a ribbon shape through the combining of layers into a final three layer product. Temperature ranges in Table 3 include ramping up and/or ramping down temperatures in each section, which was done by extruder sections having sub-sections that could be independently temperature controlled. Depending on the design of the extruder used to make each example, the back extruder (near but before the die), or alternatively, in the middle of the third section of the extruder.

| Table 3: Extrusion Crystallization Temperature and Pressure Conditions | | | | | | | | | |
|---|---|---|---|---|---|---|---|---|---|
| Example # | 1 | 2 | 3 | 4 | 5 | 6 | 7 | 8 | |
| Confection | Isomalt | Sorbitol | Maltitol | Xylitol | Erythritol + Isomalt | Erythritol + Polydextrose | Mannitol + Polydextrose | Sucrose | Range to Cover All Confections |
| First Section Temp. MIXING | 22 | 22 | 22 | 22 | 22 | 22 | 22 | 20 | 20 - 22°C |
| Second Section Temp. MELTING | 60 - 180 | 60 - 100 | 60 - 170 | 60 - 100 | 60 - 160 | 90 - 130 | 80 - 170 | 170 | 60 - 180°C |
| Third Section Temp. CRYSTALLI ZATION | 100 - 103 | 80 - 95 | 60 - 130 | 60 - 65 | 110 - 90 | 120 - 70 | 130 - 100 | 170 | 60 - 170°C |
| Fourth Section and/or Die Plates Temp. CONDITION ING | 135 - 150 | 95 - 103 | 130 - 150 | 90 - 105 | 115 - 130 | only die plate | only die plate | 190 | 90 - 190°C |
| Pressure in Third Section (at midpoint) | 300 - 900 | 350 | 950 | 350 | 500 | NA | NA | NA | 300-950psi |
| Pressure in Third Section (at end) | 600 | 350 400 | 350-950 | 300 - 350 | NA | NA | NA | 600 | 300 - 950psi |

| | | | | | | | | | |
|---|---|---|---|---|---|---|---|---|---|
| Temperatures in °C. Pressure in psi. | | | | | | | | | |

With each of Examples 1 - 8, two crystalline confection layers were combined with one extruded chewing gum layer. After the layers were combined, they were rolled (i.e., pressed with rollers) while the layers were still warm in order to make them stick together. The resulting crystalline layers were found hard, brittle, and crunchy in less than one hour after the crystalline layers exited the extruder. The crystalline confection layers became hard and brittle when they reached room temperature.

Confection Examples 9 - 10: Confectionary examples, not in accordance with the present invention, were produced having a single brittle confection layer. Calorimetry. The two examples were produced using the four section process previously described. Example 9 confection contained 99 wt. % isomalt. Example 10 confection contained 99 wt. % sorbitol. Additional ingredients in Examples 9 and 10 included flavor, color, and HIS.

Tables 4 and 5 provide the processing conditions used to produce Examples 9 and 10. The process used for making both Examples 9 and 10 was the four section process illustrated in Figure 3, with extruder sections having sub-sections (also called extruder barrels "B"). Section 1 contained one sub-section (B1). Section 2 contained three sub-sections (B2-B4). Section 3 contained five sub-sections (B5 - B10). Section 4 (i.e., die head apparatus) contained three sub-sections (B11 - B13). As previously described, the sub-sections were used to ramp up and/or ramp down the temperatures in the extruder process sections.

**Table 4: Processing Conditions For Example 9 (Isomalt).**

| | TWIN SCREW EXTRUDER | | | | | | | | | | DIE HEAD | | |
|---|---|---|---|---|---|---|---|---|---|---|---|---|---|
| | B1 | B2 | B3 | B4 | B5 | B6 | B7 | B8 | B9 | B10 | B11 | B12 | B13 |
| ISOMALT | 22 | 40 | 150 | 145 | 110 | 110 | 105 | 105 | 105 | 105 | 130 | 113 | 135 |

| | | | | | | | | | | | | | |
|---|---|---|---|---|---|---|---|---|---|---|---|---|---|
| Temperature in °C.. | | | | | | | | | | | | | |

**Table 5: Processing Conditions For Example 10 (Sorbitol)**

| | TWIN SCREW EXTRUDER | | | | | | | | | | DIE HEAD | | |
|---|---|---|---|---|---|---|---|---|---|---|---|---|---|
| | B1 | B2 | B3 | B4 | B5 | B6 | B7 | B8 | B9 | B10 | B11 | B12 | B13 |
| SORBITOL | 22 | 40 | 100 | 100 | 80 | 80 | 80 | 80 | 75 | 75 | 95 | 95 | 105 |

| | | | | | | | | | | | | | |
|---|---|---|---|---|---|---|---|---|---|---|---|---|---|
| Temperature in °C. | | | | | | | | | | | | | |

The pressure was 670 psi for isomalt (Example 9) and 700 psi for sorbitol (Example 10) in the third processing section of the extruder described in Tables 4 and 5 (that is, in section B10.

The percent of sweetener in a confection mass, which is in its crystal form can be measured by different methods including, but not limited to, Differential Scanning Calorimetry (DSC). With DSC, the crystal content is determined by measuring the thermal properties of a confection sample as it is heated. A confection mass that contains a sweetener will show a DSC profile for the sweetener in an amorphous form (i.e., glass) or in a crystalline form. A sweetener in an amorphous form will show a DSC temperature plot with a transition temperature. A sweetener in crystalline form will show a DSC temperature plot with a distinct, sharp melting temperature. The sharp melting temperature will be at the melting point temperature of the sweetener as if it was in pure form outside of the confection mass. The amount of sweetener in crystal form in a confection mass can be calculated using the area under the DSC plot melting point peak and the heat of fusion of the sweetener in pure crystalline form [i.e., (area under curve/heat of fusion)x100 = % crystalline content].

Pieces of Examples 9 and 10 were found to be hard, brittle, and crunchy when chewed within one hour of exiting the extruder and having reached room temperature. The amount of crystal content in these confection layers after they reached room temperature was calculated using data from Differential Scanning Calorimetry plots run on each of these Examples. Using the DSC plot results, the crystal content was calculated as 71.8 wt. % for the isomalt containing Example 9, and as 87.4 wt. % for the sorbitol containing Example 10.

Confection Examples 11 - 14: Confection examples, not in accordance with the present invention, were produced having a single brittle confection layer, or mass. The layers (i.e. masses) may be in combination with other layers, or provided individually. The resulting crystalline (i.e., crystallized) confection masses were perceived as hard, brittle, and crunchy when chewed less than 1 hour after the extruded confection mass left the extruder die plate and the confection reached room temperature. Examples 11 - 14 further illustrate examples having isomalt, sorbitol, maltitol and a combination of erythritol and isomalt created hard and brittle confection masses under the process steps illustrated in Figure 3. The processing conditions used to make these examples fell within the process temperature ranges listed in Table 3. Example 11 contained 100 wt. % isomalt. Example 12 contained 100 wt. % sorbitol. Example 13 contained 100 wt. % maltitol. Example 14 contained 90 wt. % erythritol and 10 wt. % isomalt. Additional ingredients were not added to initiate and control the crystal growth of these sweeteners using the process of the present invention.

**Table 6: Processing Conditions For Examples 11 - 14.**

| Table 6: Process Conditions (Temperature C) | | | | | | | | | | | | | |
|---|---|---|---|---|---|---|---|---|---|---|---|---|---|
| Section | 1 | 2 | | | | 3 | | | | | 4 (Die Head Apparatus) | | |
| | B1 | B2 | B3 | B4 | B5 | B6 | B7 | B8 | B9 | B10 | B11 | B12 | B13 |
| #11 Isomalt | 22 | 60 | 145 | 140 | 100 | 100 | 100 | 100 | 100 | 100 | 145 | 145 | 150 |
| # 12 Sorbitol | 22 | 60 | 100 | 100 | 80 | 80 | 75 | 75 | 75 | 75 | 95 | 100 | 100 |
| # 13 Maltitol | 22 | 60 | 150 | 145 | 100 | 100 | 100 | 95 | 95 | 95 | 130 | 135 | 150 |
| # 14 Erythritol:Isomalt | 22 | 60 | 130 | 130 | 110 | 90 | 90 | 90 | 90 | 90 | 115 | 115 | 130 |

Table 6 provides the processing conditions used to produce crystallized confections of Examples 11 - 14. With making Examples 11 - 14, the four section process illustrated in Figure 3 was used, with sections 2 - 4 having sub-sections (also called extruder barrels "B"). Section 1 contained one sub-section (B1). Section 2 contained three sub-sections (B2-B4). Section 3 contained five sub-sections (B5 - B10). Section 4 (i.e., die head apparatus) contained three sub-sections (B11 - B13). Sub-sections were used to ramp up and/or ramp down the temperatures in each extruder process sections.

Each of the provided Examples further illustrates the presently claimed invention.
The compositions and methods of the present invention are capable of being incorporated in the form of a variety of embodiments, only a few of which have been illustrated and described above. The described embodiments are to be considered in all respects only as illustrative and not restrictive, and the scope of the invention, therefore, is indicated by the appended claims rather than by the foregoing description.

## Claims

1. A process for making a multilayer confection, comprising the steps of:
i) creating a partially crystalline confection layer containing at least 80 wt. % sweetener, wherein at least 60 wt. % of the sweetener is in crystal form, by a process comprising the steps of:
a) mixing a confection mass containing at least 80 wt. % sweetener;
b) melting the confection mass;
c) crystallizing the confection mass at a pressure between 2068-6895 kPa (300-1000 psi),
such that at least 60 wt. % of the sweetener in the confection mass is in crystal form; and
d) forming the confection mass;
ii) creating an additional chewy confection layer; and
iii) combining the partially crystalline confection layer and the additional layer to form a multilayer confection.

2. A process for making a multilayer confection of claim 1, further comprising the step of finishing the layers before or after combining them, preferably by embossing, debossing, spraying with liquid, dusting with particulates or powder, pressing, scoring, cutting, forming, shaping, and any combination thereof.

3. A process for making a confection of claim 1 or claim 2, wherein the formed confection mass of step d) is brittle at 20°C - 27°C.

4. A process for making a confection of any one claims 1 to 3, wherein the confection mass of step d) is formed into a ribbon, sheet, or rope.

5. A process for making a confection of any one of claim 1 to 4, wherein the forming of the confection mass of step d) includes passing the confection mass through a shape maker, or other opening such as a die plate slit or die plate hole.

6. A process for making a confection of any one of claims 1 to 5, further comprising the step of conditioning the confection mass of step d), e.g. via heating and mixing the confection mass.

7. A process for making a confection of any one of claims 1 to 6, wherein the confection mass of step a) contains at least 90 wt. % sweetener.

8. A process for making a confection of any one of claims 1 to 7, wherein at least 70 wt. % of the sweetener in the confection mass of step c) is in crystal form.

9. A process for making a confection of any one of claims 1 to 8, wherein the mixing of the confection mass of step a) is at a temperature between 20°C - 40°C.

10. A process for making a confection of any one of claims 1 to 9, wherein the melting of the confection mass of step b) is at a temperature between 40°C - 190°C.

11. A process for making a confection of any one of claims 1 to 10, wherein the crystallizing of the confection mass of step c) is at a temperature between 50°C - 180°C.

12. A process for making a confection of claim 6, wherein the conditioning of the confection mass is done at 80°C - 200°C.

13. A process for making a confection of any one of claims 1 to 12, wherein the crystallizing step of step c) is performed in an extruder.

14. A process for making a confection of any one of the claims 1 to 13, wherein the melting and crystallizing steps b) and c) are performed in an extruder.

15. A process for making a confection of any one of claims 1 to 14, wherein the mixing, melting, and crystallizing steps a)-c) are performed in an extruder, preferably where the melting, crystallizing, and conditioning steps are performed in an extruder.

16. A process for making a confection of claim 6 or claim 12, wherein the crystallizing step and conditioning steps are performed in separate apparatuses.

17. A process for making a confection of any one of claims 6, 12, or 16, wherein the conditioning step is performed in a die head apparatus.

18. A process for making a confection of any one of claims 1 to 17, wherein the confection mass is conveyed from mixing step a) through crystallizing step c) by a screw configuration.

19. A process for making a confection of any one of claims 1 to 18, wherein the confection mass is mixed in an extruder and conveyed from an entrance port of the extruder to an exit die plate by two intermeshed screws that rotate in the same direction.

20. A process for making a confection for of claim 1, wherein the mixing, melting, and crystallizing process steps are performed in a jacketed kettle with a mixing member.

## Patentansprüche

1. Verfahren zum Herstellen einer mehrschichtigen Süßware, umfassend die Schritte des:
i) Erzeugens einer teilkristallinen Süßwarenschicht, die mindestens 80 Gew.-% Süßungsmittel enthält, wobei mindestens 60 Gew.-% des Süßungsmittels eine Kristallform aufweist, durch ein Verfahren, umfassend die Schritte des:
a) Mischens einer Süßwarenmasse, die mindestens 80 Gew.-% Süßungsmittel enthält;
b) Schmelzens der Süßwarenmasse;
c) Kristallisierens der Süßwarenmasse bei einem Druck zwischen 2068-6895 kPa (300-1000 psi),
sodass mindestens 60 Gew.-% des Süßungsmittels in der Süßwarenmasse eine Kristallform aufweist; und
d) Formens der Süßwarenmasse;
ii) Erzeugens einer zusätzlichen kaubaren Süßwarenschicht; und
iii) Kombinierens der teilkristallinen Süßwarenschicht und der zusätzlichen Schicht, um eine mehrschichtige Süßware zu formen.

2. Verfahren zum Herstellen einer mehrschichtigen Süßware nach Anspruch 1, weiter umfassend den Schritt des Veredelns der Schichten vor oder nach ihrem Kombinieren, vorzugsweise durch Hochprägen, Tiefprägen, Besprühen mit Flüssigkeit, Bestäuben mit Partikeln oder Puder, Pressen, Ritzen, Schneiden, Formen, Formgeben oder eine beliebige Kombination davon.

3. Verfahren zum Herstellen einer Süßware nach Anspruch 1 oder Anspruch 2, wobei die geformte Süßwarenmasse von Schritt d) bei 20 °C-27 °C spröde ist.

4. Verfahren zum Herstellen einer Süßware nach einem der Ansprüche 1 bis 3, wobei die Süßwarenmasse von Schritt d) zu einem Band, einer Platte oder einem Strang umgeformt wird.

5. Verfahren zum Herstellen einer Süßware nach einem der Ansprüche 1 bis 4, wobei das Formen der Süßwarenmasse von Schritt d) ein Durchleiten der Süßwarenmasse durch einen Formgeber oder eine andere Öffnung, wie einen Matrizenschlitz oder ein Matrizenloch, einschließt.

6. Verfahren zum Herstellen einer Süßware nach einem der Ansprüche 1 bis 5, weiter umfassend den Schritt des Aufbereitens der Süßwarenmasse von Schritt d), z. B. mittels Erwärmen und Mischen der Süßwarenmasse.

7. Verfahren zum Herstellen einer Süßware nach einem der Ansprüche 1 bis 6, wobei die Süßwarenmasse von Schritt a) mindestens 90 Gew.-% Süßungsmittel enthält.

8. Verfahren zum Herstellen einer Süßware nach einem der Ansprüche 1 bis 7, wobei mindestens 70 Gew.-% des Süßungsmittels in der Süßwarenmasse von Schritt c) eine Kristallform aufweist.

9. Verfahren zum Herstellen einer Süßware nach einem der Ansprüche 1 bis 8, wobei das Mischen der Süßwarenmasse von Schritt a) bei einer Temperatur zwischen 20 °C-40 °C erfolgt.

10. Verfahren zum Herstellen einer Süßware nach einem der Ansprüche 1 bis 9, wobei das Schmelzen der Süßwarenmasse von Schritt b) bei einer Temperatur zwischen 40 °C-190 °C erfolgt.

11. Verfahren zum Herstellen einer Süßware nach einem der Ansprüche 1 bis 10, wobei das Kristallisieren der Süßwarenmasse von Schritt c) bei einer Temperatur zwischen 50 °C-180 °C erfolgt.

12. Verfahren zum Herstellen einer Süßware nach Anspruch 6, wobei das Aufbereiten der Süßwarenmasse bei 80 °C-200 °C ausgeführt wird.

13. Verfahren zum Herstellen einer Süßware nach einem der Ansprüche 1 bis 12, wobei der Kristallisierungsschritt von Schritt c) in einem Extruder durchgeführt wird.

14. Verfahren zum Herstellen einer Süßware nach einem der Ansprüche 1 bis 13, wobei die Schmelz- und Kristallisierungsschritte b) und c) in einem Extruder durchgeführt werden.

15. Verfahren zum Herstellen einer Süßware nach einem der Ansprüche 1 bis 14, wobei die Misch-, Schmelz- und Kristallisierungsschritte a)-c) in einem Extruder durchgeführt werden, vorzugsweise wobei die Schmelz-, Kristallisierungs- und Aufbereitungsschritte in einem Extruder durchgeführt werden.

16. Verfahren zum Herstellen einer Süßware nach Anspruch 6 oder Anspruch 12, wobei der Kristallisierungsschritt und Aufbereitungsschritt in separaten Einrichtungen durchgeführt werden.

17. Verfahren zum Herstellen einer Süßware nach einem der Ansprüche 6, 12 oder 16, wobei der Aufbereitungsschritt in einer Presskopfeinrichtung durchgeführt wird.

18. Verfahren zum Herstellen einer Süßware nach einem der Ansprüche 1 bis 17, wobei die Süßwarenmasse vom Mischschritt a) bis zum Kristallisierungsschritt c) durch eine Schneckenkonfiguration transportiert wird.

19. Verfahren zum Herstellen einer Süßware nach einem der Ansprüche 1 bis 18, wobei die Süßwarenmasse in einem Extruder gemischt wird und von einer Eingangsmündung des Extruders zu einer Ausgangsmatrizenplatte durch zwei dicht kämmende Schnecken, die in der gleichen Richtung drehen, transportiert wird.

20. Verfahren zum Herstellen einer Süßware nach Anspruch 1, wobei die Misch-, Schmelz- und Kristallisierungsprozessschritte in einem ummantelten Kessel mit einem Mischelement durchgeführt werden.

## Revendications

1. Procédé de fabrication d'une confiserie multicouche, comprenant les étapes consistant à :
i) créer une couche de confiserie en partie cristalline contenant au moins 80 % en poids d'édulcorant, dans lequel au moins 60 % en poids de l'édulcorant se présentent sous forme cristalline, par un procédé comprenant les étapes consistant à :
a) mélanger une masse de confiserie contenant au moins 80 % en poids d'édulcorant ;
b) faire fondre la masse de confiserie ;
c) cristalliser la masse de confiserie sous une pression entre 2 068 et 6 895 kPa (300 à 1000 psi) en sorte qu'au moins 60 % en poids de l'édulcorant de la masse de confiserie soient sous forme cristalline ; et
d) former la masse de confiserie ;
ii) créer une couche de confiserie moelleuse supplémentaire ; et
iii) combiner la couche de confiserie en partie cristalline et la couche supplémentaire pour former une confiserie multicouche.

2. Procédé de fabrication d'une confiserie multicouche selon la revendication 1, comprenant en outre l'étape de finition des couches avant ou après leur combinaison, de préférence par gaufrage, dégaufrage, pulvérisation avec un liquide, saupoudrage avec des particules ou une poudre, pressage, incision, coupe, formage, façonnage ou une de leurs combinaisons.

3. Procédé de fabrication d'une confiserie selon la revendication 1 ou 2, dans lequel la masse de confiserie formée de l'étape d) est cassante à une température de 20 °C à 27 °C.

4. Procédé de fabrication d'une confiserie selon l'une quelconque des revendications 1 à 3, dans lequel la masse de confiserie de l'étape d) est formée en forme de ruban, de feuille ou de cordage.

5. Procédé de fabrication d'une confiserie selon l'une quelconque des revendications 1 à 4, dans lequel la formation de la masse de confiserie de l'étape d) comporte le passage de la masse de confiserie à travers un modeleur ou une autre ouverture telle qu'une fente de plaque filière ou un trou de plaque filière.

6. Procédé de fabrication d'une confiserie selon l'une quelconque des revendications 1 à 5, comprenant en outre l'étape de conditionnement de la masse de confiserie de l'étape d), par exemple par chauffage et mélange de la masse de confiserie.

7. Procédé de fabrication d'une confiserie selon l'une quelconque des revendications 1 à 6, dans lequel la masse de confiserie de l'étape a) contient au moins 90 % en poids d'édulcorant.

8. Procédé de fabrication d'une confiserie selon l'une quelconque des revendications 1 à 7, dans lequel au moins 70 % en poids de l'édulcorant de la masse de confiserie de l'étape c) se présentent sous forme cristalline.

9. Procédé de fabrication d'une confiserie selon l'une quelconque des revendications 1 à 8, dans lequel le mélange de la masse de confiserie de l'étape a) se fait à une température entre 20 °C et 40 °C.

10. Procédé de fabrication d'une confiserie selon l'une quelconque des revendications 1 à 9, dans lequel la fusion de la masse de confiserie de l'étape b) se fait à une température entre 40 °C et 190 °C.

11. Procédé de fabrication d'une confiserie selon l'une quelconque des revendications 1 à 10, dans lequel la cristallisation de la masse de confiserie de l'étape c) se fait à une température entre 50 °C et 180 °C.

12. Procédé de fabrication d'une confiserie selon la revendication 6, dans lequel le conditionnement de la masse de confiserie se fait à une température de 80 °C à 200 °C.

13. Procédé de fabrication d'une confiserie selon l'une quelconque des revendications 1 à 12, dans lequel l'étape de cristallisation de l'étape c) est effectuée dans une extrudeuse.

14. Procédé de fabrication d'une confiserie selon l'une quelconque des revendications 1 à 13, dans lequel les étapes de fusion et de cristallisation b) et c) sont effectuées dans une extrudeuse.

15. Procédé de fabrication d'une confiserie selon l'une quelconque des revendications 1 à 14, dans lequel les étapes de mélange, de fusion et de cristallisation a)-c) sont effectuées dans une extrudeuse, de préférence dans lequel les étapes de fusion, de cristallisation et de conditionnement sont effectuées dans une extrudeuse.

16. Procédé de fabrication d'une confiserie selon la revendication 6 ou la revendication 12, dans lequel l'étape de cristallisation et les étapes de conditionnement sont effectuées dans des appareils séparés.

17. Procédé de fabrication d'une confiserie selon l'une quelconque des revendications 6, 12 ou 16, dans lequel l'étape de conditionnement est effectuée dans un appareil de tête de filière.

18. Procédé de fabrication d'une confiserie selon l'une quelconque des revendications 1 à 17, dans lequel la masse de confiserie est acheminée de l'étape de mélange a) à l'étape de cristallisation c) par une configuration à vis.

19. Procédé de fabrication d'une confiserie selon l'une quelconque des revendications 1 à 18, dans lequel la masse de confiserie est mélangée dans une extrudeuse et acheminée d'un orifice d'entrée de l'extrudeuse à une plaque de filière de sortie par deux vis engrenées qui tournent dans le même sens.

20. Procédé de fabrication d'une confiserie selon la revendication 1, dans lequel les étapes de procédé de mélange, de fusion et de cristallisation sont effectuées dans un chaudron chemisé avec un élément de mélange.
